# EUROPEAN PATENT APPLICATION

(11) **EP 1 462 946 A1**
(43) Date of publication of application: **29.09.2004**
(21) Application number: 03251853.2
(22) Date of filing: 25.03.2003
(51) Int. Cl.: G06F 13/38, G11C 7/10

(54) **Architecture for a serial ATA bus based flash memory apparatus**

(71) Applicant: Acard Technology Corp., San Chung, Taipei Hsien, Taiwan (CN)
(72) Inventor: Weng, Daniel, San-Chung, Taipei Hsien, Taiwan (CN); Liu, Stephenson, San-Chung, Taipei Hsien, Taiwan (CN); Wu, Laurence, San-Chung, Taipei Hsien, Taiwan (CN)
(74) Representative: Nicholls, Michael John

(57) **Abstract**

A storage unit made of a flash array and a Serial Advanced Technology Attachment (SATA) controller, is implemented to be compatible with the SATA specification. The unit includes memory modules which can accept write commands and "read" commands and are erasable and non-volatile. The SATA/flash controller is configured to provide SATA functionality and compatibility along with common flash operations such as programming reading and erasing the above mentioned components.

## Description

### Field of the Invention

The present invention is related to semiconductor memory devices, and in particular to erasable and programmable nonvolatile memory modules which are connected to a host platform using the SATA (Serial Advanced Technology Attachment) PC Bus.

Erasable and programmable non-volatile memory modules, hereinafter referred to as flash memory or flash devices, are known in the art of storage of information. Flash devices include Flash Memory made of flash-type, floating-gate transistors and are non-volatile memories similar in functionality and performance to Flash memories, with an additional functionality that allows an in-circuit, programmable operation to erase pages of the memory. One example of an implementation of such a flash device is given in U.S. Pat. No. 5,799,168, incorporated by reference as if fully set forth herein.

Flash devices have the advantage of being relatively inexpensive and requiring relatively little power as compared to traditional magnetic storage disks. However, in a flash device, it is not practical to rewrite a previously written area of the memory without a preceding page erasure of the area. This limitation of flash devices causes them to be incompatible with typical existing operating system programs, since data cannot be written to an area of memory within the flash device in which data has previously been written, unless the area is first erased. A software management system, such as that disclosed in U.S. Pat. No. 5,404,485, filed on Mar. 5, 1993, which is incorporated as if fully set forth herein, is required to manage these functions of the flash memory device.

Currently, these flash memory devices have a second limitation, which is that they must be either attached statically to the host platform, or attached and detached dynamically using the PCMCIA [Personal Computer Memory Card International Association] interface. Both implementations have drawbacks, including difficulty of use and high cost.

### Background of the Invention

The following is an IO interface comparison between ATA (Serial Technology Attachment), SCSI (Small Computer System Interface), USB, P13 94 and SATA:

Thinking of I/O(Input/Output) interface, we have to consider two aspects of hardware and interface protocol. The interface hardware is for carrying electrons or light where copper wire or optical fiber are usually used; and the protocol is used to define connections. The protocols of I/O interface for the storage device are primarily ATA, SCSI, SATA, and P1394.

### (1) ATA Protocol:

ATA protocol was defined by SFFC, which was established by several hard-disk manufacturers in late 1980's. There have been several breakthroughs in (the) ATA that has been developed from the initial ATA-1, ATA-2 (EIDE), ATA-3, ATA-4 (UltraATA33), ATA-5 (UltraATA-66) to the latest ATA-6 (UltraATA-100/133). Many people become confused on ATA and IDE (Integrated Driving Electron). In fact, IDE is only a concept of integrating hard-drive controller into hard-drive box and ATA is an interface protocol. However, several manufacturers think they are the same. The best of ATA protocol is being cost efficient. However, the hard-drive management of ATA still depends much on CPU so that CPU is heavily burdened.

### (2) SCSI protocol:

Bus controller performs many tasks to share workload of CPU. Therefore, SCSI hard-drive is preferred for multi-task server and RAID resolution project. ATA hard-drive is suitable for single user environment.

SCSI is better than IDE on surrounding number of connections, data transfer rate, stability, etc. The number of connections and data transfer rate of SCSI from the early 5MB/s of SCSI-1 to 10MB/s of Fast SCSI, 20MB/s of Ultral SCSI, 40MB/s of Ultral Wide SCSI, 80MB/s of Ultra12 SCSI to current 160MB/s of Ultra 1160, doubles every certain amount of time. Currently, ATA-133 of IDE is released but it is still not good enough to compete with SCSI. However, the deficit tends to be smaller. In addition, SCSI is more stable for high end servers and workstations but it is also costly for general use. IDE is only sufficient for ordinary word editing and internet usage.

(3) USB 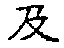 P1394:

They are easy to extend for PC interfaces and cost little. The speed of USB v1.1 is 12MB/s, USB v2.0 is 480MB/s, and P1394 is 400MB/s,

### (4) SATA:

Combining the concepts of ATA,SCSI,PCI BUS and Serial BUS, the data transfer rate is 1.5GB/s for version 1.0 , 3.0GB/s for version 2.0, and 6.0GB/s for version 3.0. It is a very good storage device for flash memory device because of its low cost and high speed.

The specification defined by SATA is certainly able to replace the functions of PATA. Besides total compatibility of the software, it also has the following advantages:
- Primary inside-the-box storage connection (not outside the box)
- Completely SW (Software) transparent with ATA (easy transition)
- Low pin count for both host and devices (2 pairs)
- Favorable (low) voltage
- Supports lower cost device architectures
- Higher performance than equivalent ATA (data rate, queuing, overlap) with higher scalability
- Much better cabling/connectors (thin, flexible)
- includes efficient power delivery
- No software dependency, relatively easier transition
- Power management and power consumption suitable for mobile use
- Allows roadmap spanning ∼ 10 years
- Cable length comparable to ATA (<1m)
- Transfer rate exceeding best ATA(∼ 150MB/s)with higher scalability
- Protocol is simple, rarely affecting overall performance
- No Peer-Peer transfer support (to/from host only)
- Cost competitive with equivalent parallel ATA solution at introduction (host + device + cable)
- Storage device centric (no cameras/scanners/printers)
- Easy installation/configuration (plug/play, no jumpers, no external terminators)
- Single host (no multi-initiators or host/host networking)

Therefore, SATA interface flash memory device will replace the traditional PATA(Parallel Advanced Technology attachment, which is original ATA) flash memory device. The system established according to SATA standard has three individual defined regions: interconnection SATA, SATA device and SATA host platform. The interconnection SATA is the connecting target of SATA device and is communicating to SATA host platform. The related elements comprise bus technology of connection model between the SATA device and the host platform.

### Detailed Description of the Invention

The present invention provides a flash memory device, containing one or more flash modules, in which the flash memory is mapped to the address space of an ASIC or a controller which has an SATA-defined electrical interface and an SATA-defined logical interface. This controller/ASIC (hereinafter termed a "controller") supports the SATA functionality according to the SATA standard, thereby supporting enumeration onto the SATA bus, as well as data reception and transmission over SATA pipes to and from SATA endpoints. This controller also supports the functionality and control of the flash memory device, as well as the processing of command and data packets from the host controller. The host controller uses one of several possible protocols, either standard or proprietary, to signal the next command to be performed to the SATA flash controller. Thus, the entire device acts as a dynamically attachable/detachable non-volatile storage device for the host platform.

An SATA flash memory device provides connection to an SATA-defined bus. The SATA-defined bus comprises:
at least one flash memory module for storing data;
an SATA connector for connecting to the SATA-defined bus and for sending packets on, and for receiving packets from, the SATA-defined bus;
an SATA controller for controlling said at least one flash memory module and for controlling said SATA connector according to at least one packet received from the SATA-defined bus, such that data is written to and read from said at least one flash memory module;
an electrical interface for connecting to said SATA connector and for receiving said packets from said SATA connector as a plurality of electrical signals;
a logical interface for connecting to said electrical interface and for translating said plurality of electrical signals to logic signals, said logic signals being passed to said at least one flash memory module;
a functional interface for receiving said logic signals such that if said logic signals represent an SATA functional packet, said functional interface sending an SATA command to said SATA controller according to said SATA functional packet;
an application packet extractor for connecting to said logical interface and for receiving said logic signals, said application packet extractor extracting at least one packet from said logic signals; and
an application command interpreter for receiving said at least one packet and for determining a command according to said at least one packet, said command being passed to said SATA controller.

Hereinafter, the term "computer" includes, but is not limited to, personal computers (PC) having an operating system such as DOS, Windows.TM., OS/2.™, or Linux; Macintosh.™ computers; computers having JAVA.™-OS as the operating system; and graphical workstations such as the computers of Sun Microsystems.™ and Silicon Graphics.™, and other computers having some version of the UNIX operating system such as AIX.™ or SOLARIS.™ of Sun Microsystems.™; or any other known and available operating system, including operating systems such as Windows CE.™ for embedded systems, including cellular telephones, handheld computational devices and palmtop computational devices, and any other computational device that can be connected to a network. Hereinafter, the term "Windows.™ " includes but is not limited to Windows95.™ , Windows 3.X.™ in which "x" is an integer such as "1", Windows NT.™, Windows98.™, Windows2000.™, Windows XP.™, Windows ME.™ , Windows CE.™ and any upgraded versions of these operating systems by Microsoft Inc. (Seattle, Wash., USA).

### Embodiment of the Invention

The present invention provides a flash memory device, containing one or more flash modules, in which the flash memory is mapped to the address space of an ASIC or a controller which has an SATA-defined electrical interface and an SATA-defined logical interface. This controller/ASIC (hereinafter termed a "controller") supports the SATA functionality according to the SATA standard, thereby supporting enumeration onto the SATA bus, as well as data reception and transmission over SATA pipes to and from SATA endpoints. This controller also supports the functionality and control of the flash memory device, as well as the processing of command and data packets from the host controller. The host controller uses one of several possible protocols, either standard or proprietary, to signal the next command to be performed to the SATA flash controller. Thus, the entire device acts as a dynamically attachable/detachable non-volatile storage device for the host platform.

It will be appreciated that the above descriptions are intended to serve only as examples, and that many other embodiments are possible within the spirit and the scope of the present invention.

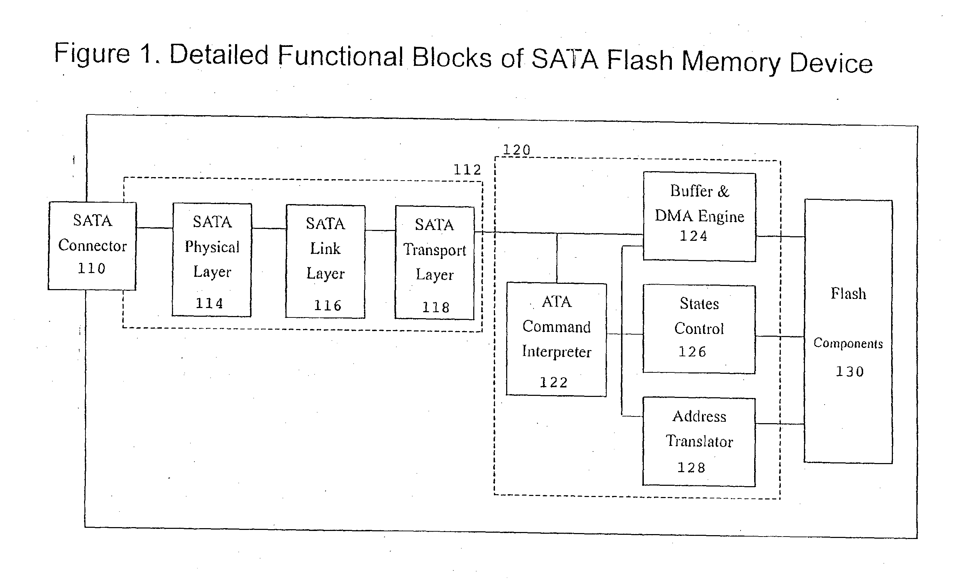

Now refer to figures. Fig. 1 describes the details internal functions of the SATA flash memory disk 230. For more details describing the structures of the functional elements of the SATA flash memory disk 230, the SATA flash memory disk 230 comprises an SATA logical interface 112 and flash memory logical interface 120, and SATA flash device connector 232 receives electrical signals from SATA cable 220. The SATA cable carries the electrical signals from main controller. These electrical signals are later sent to connector 214. An SATA-defined bus carries SATA frames such that packets can be sent to the SATA flash memory disk 230.

When a new status packet is available, the host platform 210 checks the status change of SATA flash memory disk 230 and read status packets from the SATA flash memory disk 230. The SATA flash memory disk 230 can use these status packets sending the results of different commands issued from the host platform 210 to device 230. For example, "read" command status packet comprises one of available status words (such as "successful", "error" or "invalid address") such that host platform 210 can determine the result of "read" command. Similarly, "erase" command status packet comprises a status to identify if the erase process is complete. The SATA flash memory disk 230 uses a write status packet to inform host platform 210 of the result of the write command, for example, whether the command is successful or produces error and whether the SATA flash memory disk 230 is ready for additional write command request from the host platform 210.

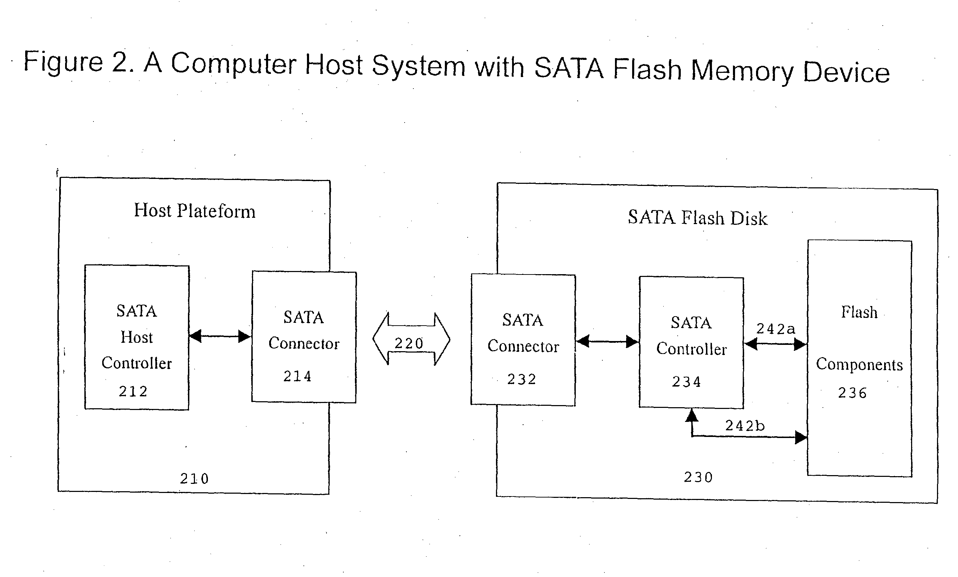

Fig. 2 is a block diagram of flash memory disk and system main elements according to the present invention. As shown in the figure, a flash memory system comprises a host platform 210 which is a non-volatile storage operation to the SATA flash memory disk 230.

According to the present invention, the host platform 210 is connected to the SATA flash memory disk 230 by means of an SATA cable 220, the host platform 210 is connected to the SATA cable 220 by means of an SATA main connector 214. When the SATA flash memory disk 230 is connected to the SATA cable 220 by means of an SATA flash device connector 232, one characteristic of host platform210 is an SATA main controller 212 which is used to control and manage all SATA transferring on the SATA bus.

One characteristic of SATA flash memory disk 230 is an SATA flash device controller 234 which is used to control the other elements of the SATA flash memory disk 230 and provide an interface between the SATA flash memory disk 230 and the SATA bus.

Whenever the SATA flash memory disk 230 is connected to the host platform 210, a standard SATA counting process will start. In this counting process, the communication mode of the SATA flash memory disk 230 and SATA flash memory disk 230 are configured by the host platform 210. Although there are many approaches of the SATA flash memory disk 230 configurations, the present invention uses the following way to describe the details for the purpose of being clear but not being limited. The host platform 210 of this approach sends commands and requests to the SATA flash memory disk 230 by means of an end. The host platform 210 questions the SATA flash memory disk 230 for status changes by means of other ends, and receives corresponding packets if any of these packets are waiting for reception.

The host platform 210 requests services from the SATA flash memory disk 230 by sending request packets to the SATA main controller 212. The SATA main controller 212 transports packets on the SATA cable. When the SATA flash memory disk 230 is the device of the request end, these requests are received by the SATA flash device controller 234, and then the SATA flash device controller 234 performs various operations such as "read", "write" and "erase" to the flash memory component 236 or supports fundamental SATA functions such as device counting and configuration. The SATA flash device controller 234 controls the power of flash memory component 236 by using control line 242a, and also by various other signals such as chip enable, "read", and "write" signal to control. The flash memory component 236 is also connected to the SATA flash device controller 234 by means of an address/data bus 242b which passes commands for performing "read", "write" and "erase" commands on the flash memory component 236. The address and data defined by the flash memory component 236 manufactures are also the same.

SATA controller 234 can be further divided into two blocks: SATA interface logic 112 and flash interface logic 120. Please refer to Fig. 1, in which SATA interface logic 112 follows the SATA standard completely and is a serial high speed interface. The speed of the first generation is 1.5Gb/sec. The standard for the second generation will be released in 2003, its speed is up to 3.0Gb/s and its structure comprises: a physical layer 114 whose functions are performing parallel/serial for input signals and send/receive analog serial signals; a link layer whose main functions are encoding/decoding, calculating CRC, sending and receiving signal frames ; a transport layer 118 which receives the commands from the link layer and generates FIS(frame information structure), then transports with the link layer 116.

Flash interface logic 120 is primarily used to explain the commands from the host platform, such as write and read a block region, to translate the address to the corresponding address of the flash memory component 130 (i.e. address translator 128), and read/write command is translated to parameters and sent to status control 126 block. Then, DMA engine 124 is activated and data starts to transfer until it is done. This explains the commands from upper layers and address translation can be done by built-in micro-processor, different micro-processors, or by hardware decoding depending on the circuitry design structure.

The real memory unit is flash memory component 130. To match high transfer rate SATA, we can configure a plurality of flash memory components 130 to obtain multiple byte set date and the transfer rate can be increased. Sometimes, it can even match that of a normal hard-drive.

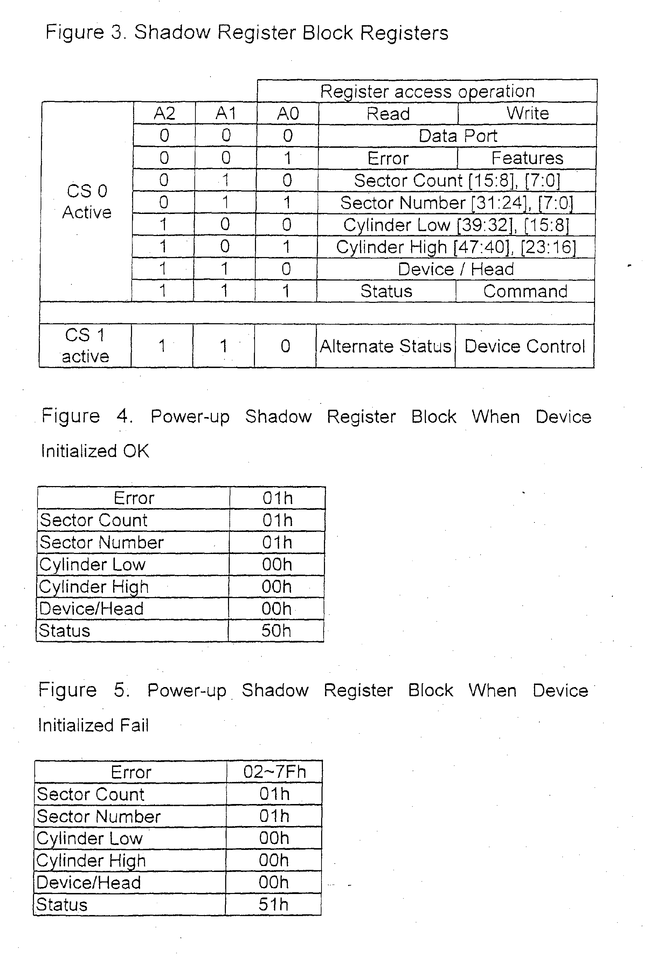

Now please refer to Fig. 3. The SATA is completely compatible with parallel ATA(PATA) in software, therefore the register structure of SATA is identical to the register structure of PATA which comprises commands and related parameters. These commands and related parameters will be processed by ATA command interpreter 122 of Fig. 1 after they enter the SATA flash memory disk. When the commands are finished, the SATA flash memory disk will issue status byte set and the commands and related parameters will be returned to the host platform 210.

Fig. 4 illustrates the parameters of the SATA flash memory disk 230 sending back to the host platform 210 under the status of power-up. This is different from the parameters of ATAPI device as shown in Fig. 6, which is because the SATA flash memory disk 230 is defined as ATA byte type, not ATAP data type.

Fig. 5 describes the value that if the SATA flash memory disk is power-up again and fails to return back to the host platform.

Fig. 6 explains the structure of the basic unit of SATA data transfer. The real data is stored in the frame information structure whose length is variable. Each frame has a set of CRC error detection code to ensure the data correction by comparing the data on two ends of transferring.

Fig. 7 to 11 describe more details of how a command of host platform is broken into several SATA frames to transfer data to complete the command.
The following is a preferred embodiment:
(1) host platform 210 fetches PIO "read" command to request writing data into SATA flash memory disk 230,
   (a) host platform 210 sends out a register FIS-host platform to device as shown in Fig.7, and sends the register to SATA flash memory disk 230.
   (b) when SATA flash memory disk 230 is ready for data reception, it sends out a PIO setup FIS-device to host platform 210 as shown in Fig. 9.
   (c) host platform 210 sends out a data FIS as shown in Fig. 10 and sends the data to flash memory disk 230,
   (d) Finally, SATA flash memory disk 230 completes the write-in action and sends out a register FIS-device to host platform 210 as shown in Fig. 8, informing that the request is done.
(2) DMA read sends out PIO "read" command to request writing information into SATA flash memory disk 230,
   (a) DMA read sends out the FIS as shown in Fig. 7 and sends the register to SATA flash memory disk 230,
   (b) when SATA device is ready for data reception, it sends out a DMA activate FIS as shown in Fig. 11 and informs DMA to read,
   (c) DMA read sends out a data FIS as shown in Fig.10 and sends the data to SATA flash memory disk 230,
   (d) Finally, SATA flash memory disk 230 completes the write-in action and sends out a register FIS-device to host platform 210 as shown in Fig. 8, informing DMA the request is done.

Using the above described protocol and architecture, host platform 210 can optionally implement any application that is implementable with any regular memory mapped or I/O mapped flash memory device. For example, host platform 210 can give a standard block device interface to each application, such as a magnetic storage medium "hard disk" drive, as disclosed in the previously described U.S. Pat. No. 5,404,485.

The operations of a typical device and system according to the present invention are as follows: when SATA is first connected to a host system, SATA main controller assigns an address to an SATA flash device on an SATA bus, and assigns the resources as described in the SATA specification. The SATA flash device substantially requests host platform to assign these resources and has to inform the host platform how much resource is needed. Therefore, if the resources have been configured to other devices by the SATA host platform, the SATA flash memory disk can optionally support any devices with slower speed.

### Brief Description of Drawings

- Fig.1: Detailed Functional Blocks of SATA Flash Memory Device;
- Fig.2: A Computer Host System with SATA Flash Memory Device;
- Fig.3: Shadow Register Block Registers;
- Fig.4: Power-up Shadow Register Block When Device Initialized OK;
- Fig. 5: Power-up Shadow Register Block When Device Initialized Fail;

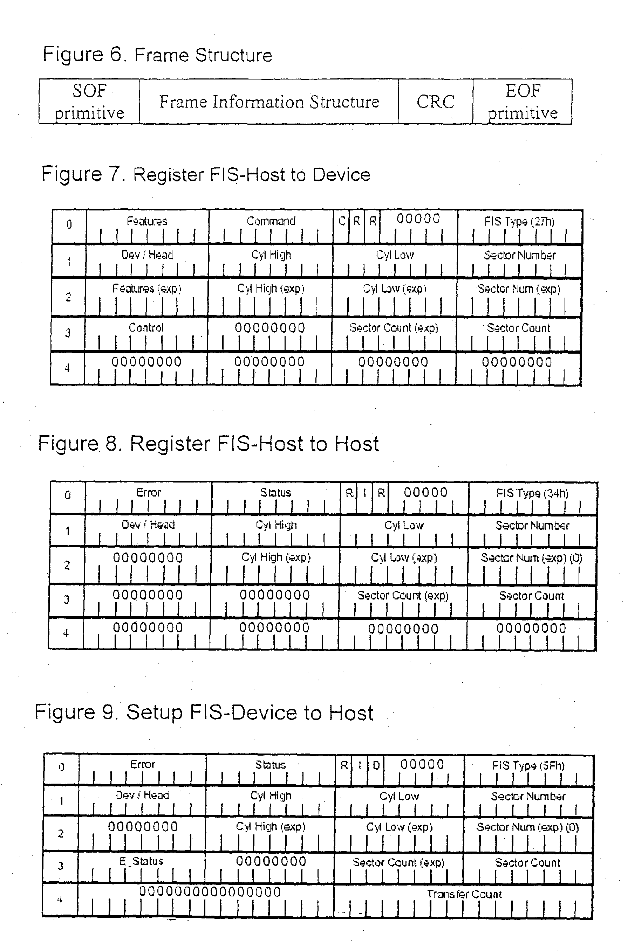

- Fig.6: Frame Structure;
- Fig.7: Register FIS(Frame Information Structure) - Host to Device;
- Fig.8: Register FIS-Device Host;
- Fig.9: PIO Setup FIS-Device to Host;

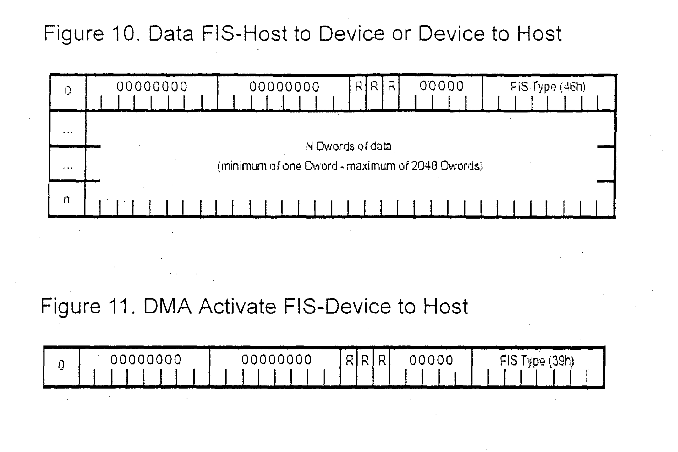

- Fig.10: Data FIS-Host to Device or Device to Host;
- Fig.11: DMA, Activate FIS-Device to Host.

## Claims

1. An SATA flash memory device for connecting to an SATA-defined bus, the flash memory device comprising:
(a) at least one flash memory module for storing data;
(b) an SATA connector for connecting to the SATA-defined bus and for sending packets on, and for receiving packets from, the SATA-defined bus;
(c) an SATA controller for controlling said at least one flash memory module and for controlling said SATA connector according to at least one packet received from the SATA-defined bus, such that data is written to and read from said at least one flash memory module;
(d) an electrical interface for connecting to said SATA connector and for receiving said packets from said SATA connector as a plurality of electrical signals;
(e) a logical interface for connecting to said electrical interface and for translating said plurality of electrical signals to logic signals, said logic signals being passed to said at least one flash memory module;
(f) a functional interface for receiving said logic signals such that if said logic signals represent an SATA functional packet, said functional interface sending an SATA command to said SATA controller according to said SATA functional packet;
(g) an application packet extractor for connecting to said logical interface and for receiving said logic signals, said application packet extractor extracting at least one packet from said logic signals; and
(h) an application command interpreter for receiving said at least one packet and for determining a command according to said at least one packet, said command being passed to said SATA controller.

2. The flash memory device of claim 1, wherein said command is a write command for writing data to said at least one flash memory module and said address is a logical address for writing said data, such that said address resolver module resolves said logical address to a physical address of said at least one flash memory module.

3. The flash memory device of claim 1, wherein said command is a "read" command for reading data from said a least one flash memory module and said address is a logical address for reading said data, such that said address resolver module resolves said logical address to a physical address of said at least one flash memory module.

4. The flash memory device of claim 1, further comprising
(i) a data handler for performing an error detection and correction routine for said at least one flash memory module.

5. The flash memory device of claim 4, further comprising:
(j) an SATA controller for sending at least one status packets of said flash memory module to said host platform in accordance with an command result after accessing said flash memory.

6. The flash memory device of claim 5, further comprising:
(k) an MTD (memory technology driver) for receiving a write command and physical address of said at least one flash memory module, and for performing said write command to said physical address.
